# EUROPÄISCHE PATENTSCHRIFT

(11) **EP 0 235 755 B1**
(45) Veröffentlichungstag und Bekanntmachung des Hinweises auf die Patenterteilung: **04.08.1993**
(21) Anmeldenummer: 87102759.5
(22) Anmeldetag: 26.02.1987
(51) Int. Cl.: H02B 13/02

(54) **Gasisolierte, gekapselte Mittelspannungs-Schaltanlage**
Gas-insulated encapsulated medium-voltage switchgear
Installation de commutation moyenne tension blindée à isolation gazeuse

(30) Priorität: 01.03.1986 DE 3606770
(43) Veröffentlichungstag der Anmeldung: 09.09.1987
(73) Patentinhaber: Fritz Driescher KG, Spezialfabrik für Elektrizitätswerksbedarf GmbH & Co., D-41844 Wegberg (DE)
(72) Erfinder: Hollmann, Fritz, Dipl.-Ing., D-5144 Wegberg-Harbeck (DE)
(74) Vertreter: Bergen, Klaus, Dipl.-Ing.

(56) Entgegenhaltungen:
- DE-A- 3 131 417
- DE-U- 8 610 679
- FR-A- 1 413 925
- FR-A- 2 186 765

## Beschreibung

Die Erfindung betrifft eine gasisolierte, gekapselte Mittelspannungs-Schaltanlage, gemäß dem Oberbegriff des Anspruchs 1.

Bei SF₆-Anlagen ist im Störlichtbogenfall in den Fällen, in denen durch den Druck des Lichtbogens Druckentlastungseinrichtungen ansprechen, mit dem Austreten von Lichtbogenzersetzungsprodukten zu rechnen. Dieses Austreten von Lichtbogenzersetzungsprodukten ist jedoch aus Sicherheitsgründen unerwünscht.

Für nicht für die Verwendung als Ortsnetzschalter beschriebene Leistungsschalter sind aus der DE-A-31 31 417 spezielle Ausführungsformen von Sensoren bekannt, wobei jedem Schalter ein Sensor zugeordnet ist, d.h. jeweils nur in der Zelle der Erder eingelegt wird, in der der Kurzschluß eintritt.

Aus der FR-A-1 413 925 sind Bersteinrichtungen als solche bekannt, jedoch nicht bei einem in Ortsnetzschaltanlagen befindlichen Mittelspannungs-Lasttrennschalter, sondern bei einer einphasig gekapselten Hochspannungsschaltanlage.

Der Erfindung liegt die Aufgabe zugrunde, eine Schaltanlage der eingangs genannten Art so auszubilden, daß eventuell entstehende Zersetzungsprodukte möglichst nicht aus der Schaltanlage austreten, und daß die Menge der entstehenden Zersetzungsprodukte möglichst gering bleibt.

Diese Aufgabe wird durch die Maßnahmen nach dem kennzeichnenden Teil des Patentanspruches 1 gelöst. Da die Erdungsschalter gleichzeitig als Kurzschließeinrichtung dienen, ist es mit der Maßnahme nach der Erfindung möglich, die Lichtbogenenergie und damit den Druck und die Menge der Zersetzungsprodukte derart zu begrenzen, daß die Schaltanlage geschlossen bleibt. Die gemeinsame Auslöseeinrichtung, vorzugsweise aus einem Übertragungsgestänge bestehend, bewirkt in vorteilhafter Weise das Einschalten aller Erdungsschalter, so daß unabhängig vom Ort des Lichtbogens die Energieeinspeisung in jedem Fall sicher unterbrochen wird, d.h. mit Sicherheit für das Einlegen der Erdungsschalter die einspeisende Zelle auch erfaßt wird, die eine andere sein kann als die gestörte.

Weitere vorteilhafte Merkmale der Erfindung sind in den Unteransprüchen enthalten und werden in der nachfolgenden Beschreibung eines Ausführungsbeispieles näher erläutert. Es zeigen:
- Fig. 1: eine prinzipmäßige Darstellung einer Schaltanlage in Vorderansicht mit ausgeschalteten Erdungsschaltern; und
- Fig. 2: die Schaltanlage gemäß Fig. 1 nach einem Störlichtbogen mit eingeschalteten Erdungsschaltern.

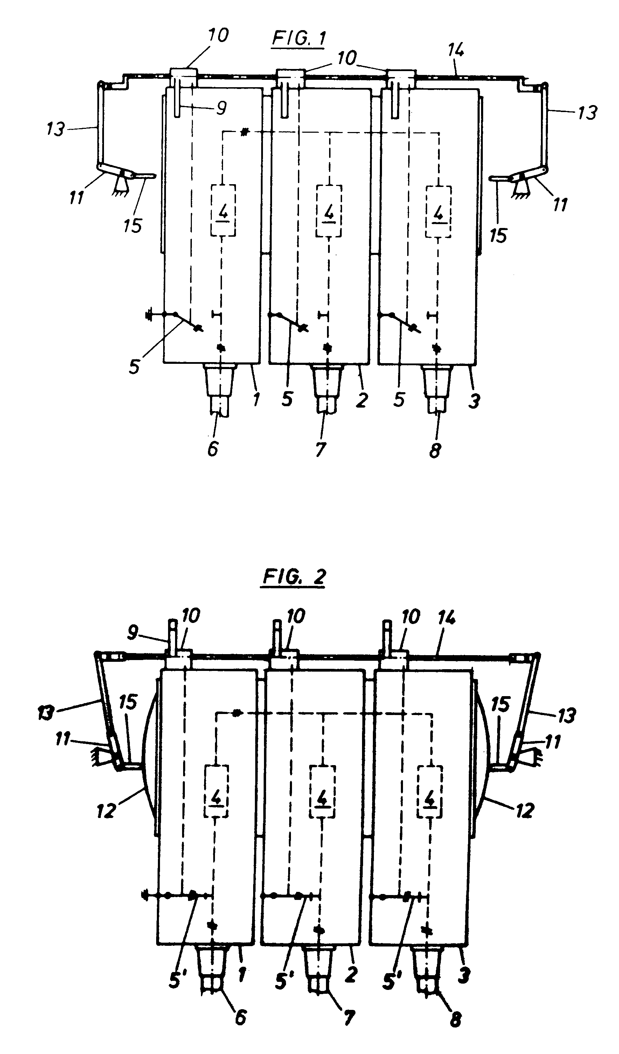

Gemäß den Fig. 1 und 2 besteht die Schaltanlage nach dem Ausführungsbeispiel aus drei Schaltfeldern 1, 2, 3 mit einer gemeinsamen Isoliergasfüllung, vorzugsweise SF₆ (Schwefelhexafluorid).

Neben Lasttrennschaltern 4 und Sammelschienen besitzt jedes Schaltfeld einen dreipoligen Erdungsschalter 5, der die abgehenden Leitungen 6, 7, 8 erdet und kurzschließt und über einen mit einer Handhabe 9 versehenen Kraftspeicherantrieb 10 betätigt wird. Der Kraftspeicherantrieb kann z.B. ein Federspeicherantrieb sein.

Durch entsprechende konstruktive Ausbildung wird erreicht, daß der Kraftspeicher beim Ausschaltvorgang gleichzeitig vorgespannt wird, um ein unabhängig von der Schaltgeschwindigkeit des Personals durchführbares sprunghaftes Einschalten zu erzielen.

Nach der Erfindung ist vorgesehen, daß die Kraftspeicherantriebe aufgrund einer als Folge des Störlichtbogendruckes stattfindenden Ausdehnung der Kapselung ausgelöst werden, wodurch sämtliche Erdungsschalter einschalten.

Die Auslösung erfolgt über eine - in den Größenverhältnissen übertrieben groß dargestellte - mechanische Verbindung zwischen der Kapselung und den Kraftspeicherantrieben 10, hier z.B. über beidseitig der Schaltanlage angebrachte Kurbeln 11, die gemäß Fig. 2 im Falle eines Störlichtbogens durch Expansion des Kapselungsabschnittes 12 über einen Stift 15 angetrieben werden und über je ein Kurbelgestänge 13 eine Auslösebewegung auf das sämtliche Kraftspeicherantriebe 10 verbindende Gestänge 14 übertragen, daß eine Sperrvorrichtung an den Kraftspeicherantrieben löst und das Einschalten der Erdungsschalter bewirkt (Einschaltlage 5').

Die nachgiebigen Abschnitte 12 der Kapselung können z.B. aus je einem Flanschdeckel, vorzugsweise mit Berstscheibe bestehen, die als Druckentlastungseinrichtung wirken. Die Auslösung der Kraftspeicherantriebe erfolgt sowohl bei Aufwölbung der Kapselung als auch beim Abspringen des Flanschdeckels. Zur Auslösung der Kraftspeicherantriebe genügt es schon, wenn zumindest ein Flanschdeckel sich aufwölbt. Alternativ kann der nachgiebige Abschnitt auch ein Faltenbalg sein.

Da es sich bei der Schaltanlage um einen hermetisch geschlossenen Behälter handelt, dessen Gasfüllung in der Regel unter einem geringen Überdruck steht, ist vorgesehen, daß die Auslöseeinrichtung, insbesondere der Stift 15, im ungestörten Betrieb der Schaltanlage einen geringen Abstand zu dem nachgiebigen Kapselungsabschnitt 12 besitzt, so daß temperaturbedingtes Ausdehnen des nachgiebigen Kapselungsabschnittes nicht zum Auslösen der Kraftspeicherantriebe führt.

## Patentansprüche

1. Gasisolierte, gekapselte Mittelspannungs-Schaltanlage, im wesentlichen mit Schaltern (4), Antriebselementen, Sammelschienen und angeschlossenen Leitungen (6, 7, 8), denen Erdungsschalter (5) zugeordnet sind, wobei zumindest alle diejenigen Erdungsschalter (5), die den einspeisenden Leitungen (6, 7, 8) zugeordnet sind, vorgespannte Kraftspeicherantriebe (10) mit mit nachgiebigen Abschnitten der Kapselung verbundenen Auslöseeinrichtungen besitzen, dadurch gekennzeichnet, daß bei je aus mehreren Schaltfeldern (1, 2, 3) bestehenden Schaltanlagen für die Schaltfelder (1, 2, 3) eine gemeinsame Gasfüllung vorgesehen ist, daß eine einzige Auslöseeinrichtung die Kraftspeicherantriebe der verschiedenen Schaltfelder gemeinsam auslöst und daß die Schalter (4) als Lasttrennschalter ausgeführt sind.

2. Schaltanlage nach Anspruch 1, dadurch gekennzeichnet, daß die gemeinsame Auslöseeinrichtung ein Gestänge (14) besitzt, das mit allen Kraftspeicherantrieben (10) verbunden ist.

3. Schaltanlage nach Anspruch 1 oder 2, dadurch gekennzeichnet, daß der bei Störlichtbogendruck nachgebende Abschnitt (12) der Kapselung gleichzeitig als Druckentlastungseinrichtung ausgebildet ist.

4. Schaltanlage nach einem oder mehreren der Ansprüche 1 bis 3, dadurch gekennzeichnet, daß das gemeinsame Auslösegestänge (14) der Kraftspeicherantriebe (10) längs der Schaltanlage geführt ist, und daß beide Enden des Auslösegestänges (14) über eine gelenkige Verbindung mit je einer seitlich an der Anlage vorgesehenen Druckentlastungseinrichtung verbunden ist.

5. Schaltanlage nach einem oder mehreren der Ansprüche 1 bis 4, dadurch gekennzeichnet, daß der Abschnitt (12) aus einer Berstscheibe besteht.

6. Schaltanlage nach einem oder mehreren der Ansprüche 3 bis 5, dadurch gekennzeichnet, daß die Druckentlastungseinrichtung ein Flanschdeckel ist.

7. Schaltanlage nach einem oder mehreren der Ansprüche 1 bis 6, dadurch gekennzeichnet, daß der bei Störlichtbogendruck nachgebende Abschnitt (12) der Kapselung aus einem Faltenbalg besteht.

8. Schaltanlage nach einem oder mehreren der Ansprüche 1 bis 7, dadurch gekennzeichnet, daß die Auslöseeinrichtung im ungestörten Betrieb der Schaltanlage einen geringen Abstand zu dem nachgiebigen Abschnitt (12) der Kapselung besitzt, so daß temperaturbedingtes Ausdehnen des nachgiebigen Abschnittes der Kapselung nicht zum Auslösen der Kraftspeicherantriebe (10) führt.

9. Schaltanlage nach einem oder mehreren der Ansprüche 1 bis 8, dadurch gekennzeichnet, daß die Auslöseeinrichtung aus einer mechanischen, vorzugsweise durch Stangen und Hebel gebildeten Verbindung zu den Kraftspeicherantrieben (10) besteht und von mindestens einem in den Wirkbereich des nachgiebigen Abschnitts (12) zeichenden Stift (15) ausgelost bzw. angetrieben wird.

## Claims

1. Gas-insulated enclosed medium-voltage switchgear comprising essentially switches (4), operating elements, busbars and connected conductors (6, 7, 8), with which are associated earthing switches (5), wherein all the earthing switches (5) that are associated with the supply conductors (6, 7, 8), have associated with them preloaded stored energy mechanisms (10) having tripping devices that are connected to yielding sections of the enclosure, characterised in that in switchgear comprising several switching units (1, 2, 3) a common gas filling is provided for the switching units (1, 2, 3), that a single tripping device trips the stored energy mechanisms of the various units, and that the switches are load interruptor switches.

2. Switchgear according to claim 1, characterised in that the common tripping device includes a linkage (14) that is connected to all the stored energy mechanisms (10).

3. Switchgear according to claim 1 or claim 2, characterised in that the section (12) of the enclosure that yields in case of accidental arcing pressure serves at the same time as a pressure relief device.

4. Switchgear according to one or more of claims 1 to 3, characterised in that the common tripping linkage (14) of the stored energy mechanisms runs along the switchgear, and that each end of the tripping linkage (14) is connected to a respective pressure relief device provided laterally of the switchgear.

5. Switchgear according to one or more of claims 1 to 4, characterised in that the section (12) consists of a bursting disc.

6. Switchgear according to one or more of claims 3 to 5, characterised in that the pressure relief device is a flange cover.

7. Switchgear according to one or more of claims 1 to 6, characterised in that the section (12) of the enclosure that yields in the event of accidental arc pressure consists of a bellows.

8. Switchgear according to one or more of claims 1 to 7, characterised in that during normal operation of the switchgear there is a short distance between the tripping device and the yielding section (12) of the enclosure, so that thermal expansion of the yielding section of the enclosure does not cause tripping of the stored energy mechanism (10).

9. Switchgear according to one or more of claims 1 to 8, characterised in that the tripping device consists of a mechanical connection to the stored energy mechanisms (10) formed of rods and levers, and is tripped or operated by at least one in the effective range of the yielding section (12).

## Revendications

1. Installation de commutation moyenne tension, blindée, isolée au gaz, comprenant essentiellement des commutateurs (4), des éléments de commande, des barres et des conducteurs de départ (6, 7, 8) raccordés aux-quels on a raccordé des interrupteurs de mise à la terre (5), au moins tous les interrupteurs de mise à la terre (5) qui sont raccordés aux conducteurs de départ (6, 7, 8) d'alimentation présentent des entraînements à accumulation d'énergie (10) polarisés comprenant des dispositifs d'enclenchement qui sont reliés à des parties flexibles du blindage, caractérisée en ce qu'on a prévu pour les panneaux de couplage (1, 2, 3), pour chaque installation de commutation constituée par plu-sieurs panneaux de couplage (1, 2, 3), un remplissage de gaz commun, en ce qu'une seule installation d'enclenchement enclenche l'ensemble des entraînements à accumulation d'énergie des différents panneaux de couplage et en ce que les commutateurs (4) sont réalisés sous forme de sectionneurs à coupure en charge.

2. Installation de commutation selon la revendication 1, caractérisée en ce que le dispositif d'enclenchement commun présente une tige (14) qui est reliée à tous les entraînements à accumulation d'énergie (10).

3. Installation de commutation selon la revendication 1 ou 2, caractérisée en ce que la partie (12) du blindage qui se plie lors d'un arc électrique parasite est simultanément un dispositif de détente de pression.

4. Installation de commutation selon une ou plu-sieurs des revendications 1 à 3, caractérisée en ce que la tige d'enclenchement (14) commune de l'entraînement à accumulation d'énergie (10) est placée le long de l'installation de commutation et en ce que les deux extrémités de la tige d'enclenchement (14) sont reliées via une jonction articulée à un dispositif de détente de pression prévu sur le côté de l'installation.

5. Installation de commutation selon une ou plu-sieurs des revendications 1 à 4, caractérisée en ce que la partie (12) consiste en un disque de rupture.

6. Installation de commutation selon une ou plu-sieurs des revendications 3 à 5, caractérisée en ce que le dispositif de détente de pression est un couvercle à bride.

7. Installation de commutation selon une ou plu-sieurs des revendications 1 à 6, caractérisée en ce que la partie (12) du blindage qui plie lors d'un arc électrique parasite consiste en un soufflet.

8. Installation de commutation selon une ou plu-sieurs des revendications 1 à 7, caractérisée en ce que le dispositif d'enclenchement, lors du fonctionnement normal de l'installation de commutation, est situé à une faible distance de la partie (12) flexible du blindage de telle manière qu'un dilatation provoquée par la température de la partie flexible du blindage ne provoque pas d'enclenchement de l'entraînement à accumulation d'énergie (10).

9. Installation de commutation selon une ou plu-sieurs des revendications 1 à 8, caractérisée en ce que le dispositif d'enclenchement est constitué par un couplage mécanique, de préférence constitué par des tiges et des manettes, relié aux entraînements à accumulation d'énergie (10) et enclenché ou entrainé par au moins une des parties (12) flexibles situées dans la partie active.
